# FASCICULE DE BREVET EUROPEEN

(11) **EP 2 017 514 B1**
(45) Date de publication et mention de la délivrance du brevet: **14.11.2018**
(21) Numéro de dépôt: 07111498.7
(22) Date de dépôt: 02.07.2007
(51) Int. Cl.: G05D 16/06, F16K 31/145, F16K 1/44

(54) **Vanne de fermeture intégrée dans un détendeur**
Absperrventil in einem Druckminderventil integriert
Closing valve integrated into a pressure-reducing valve

(43) Date de publication de la demande: 21.01.2009
(73) Titulaire: LUXEMBOURG PATENT COMPANY S.A., 7440 Lintgen (LU)
(72) Inventeur: Risse, Claude, 57310 Bertrange (FR)
(74) Mandataire: Lecomte & Partners

(56) Documents cités:
- EP-A- 0 545 846
- EP-A- 0 952 376
- WO-A-98/41786
- DE-A1-102005 017 618
- JP-A- 56 010 876
- US-A- 4 275 764
- US-A- 5 924 447

## Description

### Domaine technique

L'invention a trait à un dispositif de détente pour gaz sous pression comme par exemple l'hydrogène.

### Technique antérieure

Un dispositif de détente ou de régulation de pression d'un gaz sous pression est connu du document EP 1031900 A (SMC CORPORATION) 30.08.2000 . Celui-ci divulgue un dispositif de détente comprenant un élément de fermeture du passage de gaz comportant des moyens d'étanchéité coopérant avec un siège. Cet élément est actionné par un piston soumis à l'un des ses cotés à la pression d'un premier ressort réglable et au coté opposé à la pression du gaz après passage entre l'élément de fermeture et le siège. Cette pression est exercée via une membrane étanche délimitant la chambre basse pression en aval de l'élément de fermeture.

La pression exercée par le ressort peut être variée en actionnant la molette de pré-compression du premier ressort. Ceci permet en pratique de régler la pression de service du dispositif. La fermeture du dispositif s'opère en tournant la molette jusqu'au maximum dans le sens de décompression du ressort. Un second ressort agissant dans le sens opposé pousse le piston vers le haut. Le fait de décomprimer le premier ressort permet au second ressort de lever le piston et, par là, de fermer le dispositif.

En cas de détérioration de l'étanchéité entre l'élément de fermeture et son siège, la fermeture totale du dispositif ne sera pas assurée.

Le document GB 2 267 950 A (JULIAN STEWARD TAYLOR) 22.12.1993 divulgue également un dispositif de détende de gaz similaire dans son principe à celui du document précédant et comportant un système de sécurité en cas de déficience de l'étanchéité du siège du détendeur. En effet, un élément de fermeture supplémentaire est disposé en amont du détendeur, c'est-à-dire dans la haute pression, et maintenu en position ouverte par une tige de compression dimensionnée pour flamber en cas de surpression à la sortie du dispositif. En effet, l'élément de fermeture supplémentaire est relié à une membrane soumise à la pression de sortie du détendeur qui exerce un effort de compression sur la tige. En cas d'encrassement ou de givrage du détendeur, la pression à la sortie du dispositif est susceptible d'augmenter au-delà d'une limite acceptable et ceci aura pour effet de faire flamber la tige et de fermer l'élément de fermeture supplémentaire sous l'effet d'un ressort le pressant dans le sens de la fermeture.

La solution au problème de disfonctionnement possible de l'élément de fermeture du détendeur telle que proposée dans GB 2 267 950 A (JULIAN STEWARD TAYLOR) 22.12.1993 n'est pas satisfaisante pour des raisons d'encombrement et de complexité. De plus, ce système de sécurité ne fonctionne que lorsque la pression de sortie du dispositif dépasse une certaine limite. Ceci signifie que le système n'agit pas lorsqu'aucun appareil n'est connecté au dispositif. Il n'agit donc pas comme vanne de sécurité mais plutôt comme système de protection visant à limiter la pression du coté utilisateur du détendeur. Le document de brevet US 4,275,764 divulgue un dispositif de détente selon le préambule de la revendication 1. Il présente deux obturateurs dont un est actionné exclusivement par un volant de commande manuel. Cette construction est complexe et requiert une intervention manuelle.

### Exposé de l'invention

L'invention cherche à fournir une solution simple et compacte aux problèmes sus mentionnés, à savoir de proposer un dispositif de détente comportant un système de fermeture sécurisé.

Selon l'invention il est proposé un dispositif de détente et/ou de régulation de gaz comportant: un corps avec un passage, une entrée et une sortie de gaz, l'entrée et la sortie étant en liaison avec le passage; des moyens d'obturation du passage; des moyens mobiles définissant avec le corps du dispositif une chambre basse pression en aval des moyens d'obturation, les moyens mobiles actionnant les moyens d'obturation en fonction de la pression régnant dans la chambre basse pression; les moyens d'obturation comportent un premier obturateur et un second obturateur monté en aval du premier dans le passage; et le premier et le second obturateur sont liés mécaniquement de sorte que le premier obturateur ferme avant le second.

Le premier et le second obturateur peuvent comporter, chacun, un élément mobile d'obturation coopérant avec un siège respectif solidaire du corps du dispositif.

Préférentiellement le premier obturateur est configuré de sorte qu'un ressort le pousse vers son siège dans le sens d'écoulement normal du gaz en vue de fermer le passage, et est lié mécaniquement avec le second obturateur par simple butée mécanique de sorte que le second obturateur pousse le premier lors d'un mouvement d'ouverture et qu'il existe un léger jeu dans la liaison mécanique entre les deux obturateurs lorsque les deux obturateurs sont fermés.

Préférentiellement, le second obturateur ferme le passage de gaz lorsque son élément mobile d'obturation est en appui sur son siège dans le sens d'écoulement normal du gaz.

Le second obturateur peut être attelé aux moyens mobiles.

Préférentiellement l'élément mobile du second obturateur est poussé vers son siège par un ressort en appui sur le corps du dispositif et, préférentiellement, est lié aux moyens mobiles par une butée mécanique.

L'élément mobile du premier obturateur peut comporter une partie conique coopérant avec le siège du premier obturateur, et une partie allongée s'étendant à travers le siège en aval de la partie conique.

L'élément mobile du second obturateur peut comporter une partie conique coopérant avec le siège du second obturateur, et une partie allongée s'étendant à travers le siège en aval de la partie conique.

Dispositif de détente selon la revendication précédente, caractérisé en ce que la partie allongée de l'élément mobile du premier obturateur coopère avec la partie conique de l'élément mobile du second obturateur.

La partie conique de l'élément mobile du second obturateur peut comporter une cavité recevant en butée la partie allongée de l'élément mobile du premier obturateur de sorte à pouvoir transmettre un mouvement d'ouverture du second obturateur provoqué par les moyens mobiles à l'élément mobile du premier obturateur.

La partie allongée de l'élément mobile du premier obturateur peut être à distance de la butée de la cavité du second obturateur la recevant lorsque les deux obturateurs sont fermés.

### Description sommaire des dessins

La figure 1 montre une vue en coupe d'un dispositif de détente et/ou de régulation de gaz selon l'invention.
La figure 2 montre une vue en coupe selon B-B du dispositif de la figure 1.

### Meilleure manière de réaliser l'invention

Le dispositif comporte un corps 1 comportant une entrée de gaz 2, une sortie 3 et un passage reliant l'entrée et la sortie. Ce passage est obturé par deux obturateurs placés en série et alignés selon l'axe principal du corps du dispositif. Le premier obturateur comporte un élément mobile 5 de forme conique coopérant de manière étanche avec un siège 6. Le siège peut être rapporté ou encore usiné directement dans le corps. Un ressort 4 exerce une pression sur l'élément mobile 5 dans le sens de la fermeture du premier obturateur. L'élément mobile 5 comporte une partie allongée s'étendant à partir de la partie conique et traversant l'orifice du siège 6. Dans son état fermé le premier obturateur définit deux zones: en amont de celui-ci règne la haute pression correspondant à celle dans la bouteille ou la conduite à laquelle le dispositif est raccordé, et en aval du premier obturateur une zone de basse pression, à savoir où le gaz est déjà partiellement détendu. Le deuxième obturateur est placé en série avec le premier et en aval de celui-ci. Il comporte un élément mobile 7 de forme conique coopérant de manière étanche avec un siège 8. Tout comme pour le premier obturateur, le siège peut être rapporté ou encore usiné directement dans le corps. Lorsqu'ils sont fermés, les deux obturateurs ainsi que le passage dans le corps du dispositif définissent une chambre intermédiaire 20. Dans cette chambre intermédiaire, la partie conique de l'élément mobile 7 du second obturateur comporte une cavité recevant de manière coulissante l'extrémité de la partie allongée de l'élément mobile 5. L'élément mobile 7 comporte également une partie allongée s'étendant à partir de la partie conique et traversant l'orifice du siège 8. L'extrémité de cette partie allongée coopère avec une pièce mobile 9. Celle-ci définit avec le corps du dispositif et le second obturateur une chambre dite de basse pression en communication avec la sortie 3 du dispositif.

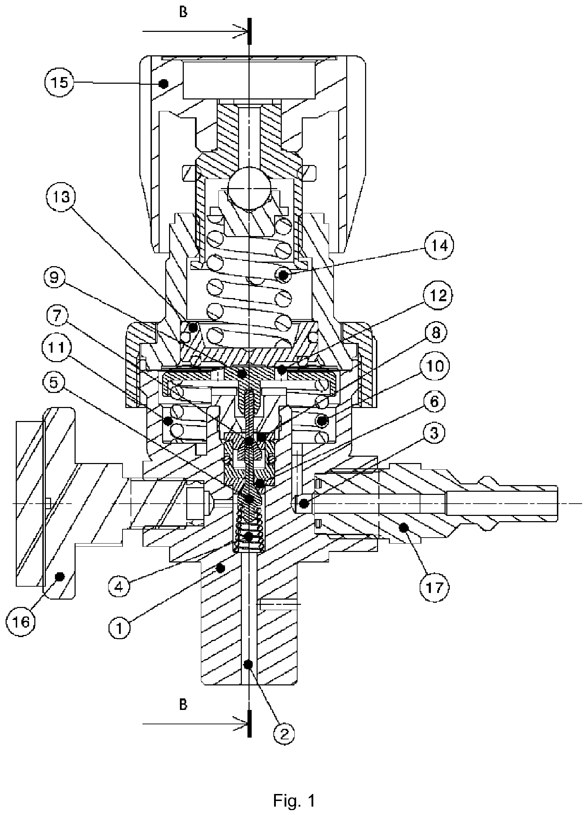

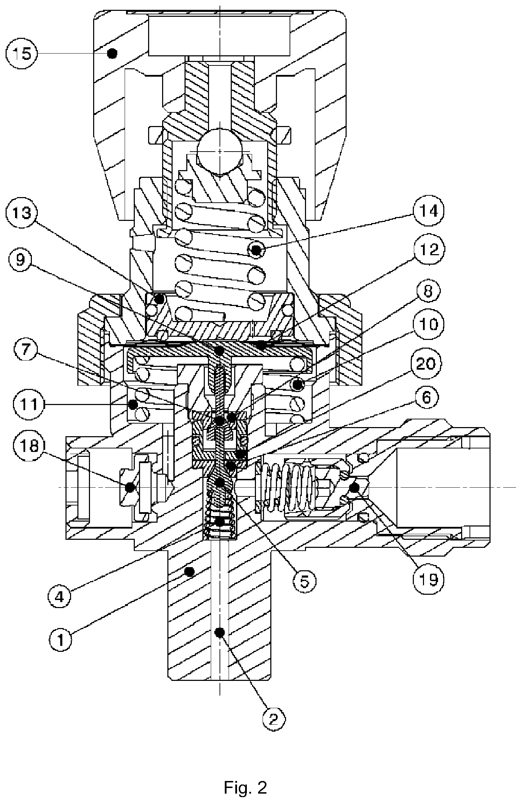

Une membrane 12 solidaire de la pièce mobile 9 cloisonne de manière étanche la partie supérieure de la chambre basse pression. La pièce mobile 9 est soumise à la pression d'un moyen élastique tel qu'un ressort 10 en appui sur le corps du dispositif. Dans le cas de l'exemple des figures 1 et 2, le ressort 10 exerce un effort vertical dirigé vers le haut. Il tend donc à lever la pièce 9. Cette dernière est en contact via la membrane 12 avec un piston 13 apte à coulisser dans la partie haute du corps du dispositif, le piston 13 étant lui-même soumis à un effort vertical d'un moyen élastique tel qu'un ressort 14. Ce dernier est en appui sur une butée à bille dont la position selon l'axe principal du dispositif (et du ressort) peut être variée au moyen d'une molette 15. Celle-ci permet de régler la pression de détente du dispositif ainsi que de fermer le dispositif.

Un manomètre 16 est prévu en connexion directe avec la haute pression. Un raccord de branchement 17 pour l'utilisateur est prévu sur le coté du dispositif. La figure 2 montre également une soupape de surpression 18 en connexion directe avec chambre basse pression et donc la sortie du dispositif. Un dispositif de remplissage 19 de la bouteille est prévu sur le coté du dispositif en connexion directe avec la haute pression.

En fonctionnement, la molette 15 est actionnée de sorte à soumettre le ressort 14 à une pression suffisante que pour contrer le contre effort des ressorts 4 et 10 et le contre effort résultant de la pression du gaz sous haute pression agissant sur une section de l'élément mobile 5 du premier obturateur correspondant à la section de passage. La pièce mobile 9 se déplace alors légèrement vers le bas. Ce mouvement est transmis directement à l'élément mobile 7 du second obturateur ainsi qu'à l'élément mobile 5 du premier obturateur via la butée mécanique. Une fois les deux obturateurs ouverts, la pression s'installe dans la chambre intermédiaire 20 ainsi que dans la chambre basse pression 11. La pression s'installant dans la chambre basse pression, la membrane 12 est sollicitée vers le haut et déplace légèrement le piston 13 vers le haut en comprimant le ressort 14. La pièce mobile 9 peut alors se déplacer vers le haut afin de déplacer les deux éléments mobiles 7 et 5 des obturateurs et de réguler le débit de gaz et par là la pression de travail dans la chambre basse pression.

L'engagement des deux éléments mobiles 5 et 7 est tel que le premier obturateur 5, 6 ferme un peu avant le second obturateur 7, 8 lorsque la pièce mobile se déplace vers la haut en vue de fermer le dispositif. Ceci signifie que l'élément mobile 7 ne touche par encore son siège 8 lorsque l'élément mobile 5 vient tout juste de s'asseoir sur son siège 6. Lorsque le second obturateur est fermé, il existe donc un léger jeu entre l'extrémité de la tige allongée de l'élément mobile 5 du premier obturateur et le fond de butée de la cavité de l'élément mobile 7 recevant celle-ci.

Lors de la fermeture du dispositif, la molette est actionnée par l'opérateur de sorte à libérer au maximum la précontrainte du ressort 14, c'est-à-dire de faire monter jusqu'à sa butée haute la retenue du ressort 14. Ainsi la pression des ressorts 4 et 10 est suffisante pour contrer le ressort 14 de sorte à faire monter la pièce mobile 9 et le piston 13. Etant donné que l'élément mobile 7 du second obturateur est attelé à la pièce mobile, la montée de celle-ci à pour effet de le faire monter également. La montée de l'élément mobile 7 a lui pour effet, d'autoriser la montée de l'élément mobile 5 sous l'effet du ressort 4 jusqu'à fermeture. Une fois le premier obturateur fermé, la pression en aval de celui-ci, et donc dans la chambre intermédiaire 20 chute puisque le second obturateur n'est pas encore totalement fermé. Lorsque l'opérateur continue à libérer la précontrainte du ressort 14 jusqu'à atteindre une butée mécanique par exemple, la pièce mobile 9 peut d'avantage monter et va donc fermer la second obturateur. A partir de ce moment là, le dispositif est doublement fermé par le premier et le second obturateur. Le second obturateur travaille en principe toujours à basse pression alors que le premier obturateur, lui, est constamment soumis à la haute pression de la bouteille. Le second obturateur peut donc jouer pleinement son rôle d'obturateur de sécurité dans la mesure où il n'est en principe que très peu sollicité si ce n'est lorsque le premier obturateur présente une fuite.

Il est à noter que le second obturateur ne doit pas nécessairement être attelé à la pièce mobile 9 du détendeur. En effet, l'élément mobile 7 pourrait être soumis à l'effort d'un ressort en appui sur le corps du dispositif similairement à l'élément mobile du premier obturateur. Un simple engagement du type « butée » suffirait alors dans ce cas entre la pièce mobile 9 et l'extrémité de la partie allongée de l'élément mobile 7.

Les éléments mobiles 5 et 7 ne doivent pas nécessairement présenter une forme conique coopérant avec le siège respectif. En effet, il est tout-à-fait envisageable de considérer que l'un ou les deux des éléments mobiles comporte(nt) par exemple un élément plat et circulaire coopérant avec un siège plan. Inversement, il est également envisageable que ce soit le siège et non pas l'élément obturateur qui soit mobile.

La pièce mobile 9 coopérant avec la membrane peut être remplacée par tout autre dispositif de commande de détente équivalent. En effet, on pourrait par exemple la remplacer par une pièce mobile similaire connecté à un soufflet métallique de façon étanche afin d'y former la chambre basse pression. Ceci éviterait l'usage de la membrane 12 puisque le soufflet métallique assurerait l'étanchéité de la chambre.

## Revendications

1. Dispositif de détente et/ou de régulation de gaz comportant:
un corps (1) avec un passage, une entrée (2) et une sortie (3) de gaz, l'entrée et la sortie étant en liaison avec le passage;
des moyens d'obturation (5, 6, 7, 8) du passage;
des moyens mobiles (9, 12) définissant avec le corps (1) du dispositif une chambre basse pression (11) en aval des moyens d'obturation (5, 6, 7, 8) ;
les moyens d'obturation (5, 6, 7, 8) comportant un premier obturateur (5, 6) et un second obturateur (7, 8) monté en aval du premier dans le passage;
**caractérisé en ce que**
les moyens mobiles (9, 12) actionnent les moyens d'obturation (5, 6, 7, 8) en fonction de la pression régnant dans la chambre basse pression (11), et le premier et le second obturateur (5, 6, 7, 8) sont liés mécaniquement de sorte que le premier obturateur (5, 6) ferme avant le second (7, 8).

2. Dispositif de détente selon la revendication précédente, **caractérisé en ce que** le premier et le second obturateur comporte, chacun, un élément mobile d'obturation (5; 7) coopérant avec un siège respectif (6 ; 8) solidaire du corps (1) du dispositif.

3. Dispositif de détente selon la revendication précédente, **caractérisé en ce que** le premier obturateur (5, 6) est configuré de sorte qu'un ressort (4) le pousse vers son siège (6) dans le sens d'écoulement normal du gaz en vue de fermer le passage, et est lié mécaniquement avec le second obturateur (7, 8) par simple butée mécanique de sorte que le second obturateur (7, 8) pousse le premier lors d'un mouvement d'ouverture et qu'il existe un léger jeu dans la liaison mécanique entre les deux obturateurs lorsque les deux obturateurs sont fermés,

4. Dispositif de détente selon la revendication précédente, **caractérisé en ce que** le second obturateur (7, 8) ferme le passage de gaz lorsque son élément mobile d'obturation (7) est en appui sur son siège (8) dans le sens d'écoulement normal du gaz.

5. Dispositif de détente selon la revendication précédente, **caractérisé en ce que** le second obturateur (7, 8) est attelé aux moyens mobiles (9).

6. Dispositif de détente selon la revendication 4, **caractérisé en ce que** l'élément mobile (7) du second obturateur (7, 8) est poussé vers son siège (8) par un ressort en appui sur le corps (1) du dispositif et, préférentiellement, est lié aux moyens mobiles (9, 11) par une butée mécanique.

7. Dispositif de détente selon l'une des revendications 2-6, **caractérisé en ce que** l'élément (5) mobile du premier obturateur (5,6) comporte une partie conique coopérant avec le siège (6) du premier obturateur, et une partie allongée s'étendant à travers le siège (6) en aval de la partie conique,

8. Dispositif de détente selon la revendication précédente, **caractérisé en ce que** l'élément mobile (7) du second obturateur (7, 8) comporte une partie conique coopérant avec le siège (8) du second obturateur, et une partie allongée s'étendant à travers le siège (8) en aval de la partie conique.

9. Dispositif de détente selon la revendication précédente, **caractérisé en ce que** la partie allongée de l'élément mobile (5) du premier obturateur (5, 6) coopère avec la partie conique de l'élément mobile (7) du second obturateur (7, 8).

10. Dispositif de détente selon la revendication précédente, **caractérisé en ce que** la partie conique de l'élément mobile (7) du second obturateur (7, 8) comporte une cavité recevant en butée la partie allongée de l'élément mobile (5) du premier obturateur (5, 6) de sorte à pouvoir transmettre un mouvement d'ouverture du second obturateur provoqué par les moyens mobiles (9, 11) à l'élément mobile (5) du premier obturateur (5, 6).

11. Dispositif de détente selon la revendication précédente, **caractérisé en ce que** la partie allongée de l'élément mobile (5) du premier obturateur (5, 6) est à distance de la butée de la cavité du second obturateur la recevant lorsque les deux obturateurs sont fermés.

## Patentansprüche

1. Gasfreigabe- und/oder Regelvorrichtung, umfassend:
einen Körper (1) mit einem Durchgang, einem Gaseinlass (2) und einem Gasauslass (3), wobei der Einlass und der Auslass mit dem Durchgang verbunden sind;
Verschlussmittel (5, 6, 7, 8) zum Abschließen des Durchgangs;
mobile Mittel (9, 12), die mit dem Vorrichtungskörper (1) eine Niederdruckkammer (11) stromabwärts von den Verschlussmitteln (5, 6, 7, 8) definieren;
wobei die Verschlussmittel (5, 6, 7, 8) einen ersten Verschluss (5, 6) und einen stromabwärts von dem ersten in dem Durchgang platzierten zweiten Verschluss (7, 8) umfassen;
**dadurch gekennzeichnet, dass**
die mobilen Mittel (9, 11) die Verschlussmittel (5, 6, 7, 8) abhängig von dem Druck in der Niederdruckkammer (11) betätigen und der erste und der zweite Verschluss (5, 6, 7, 8) derart mechanisch verbunden sind, dass sich der erste Verschluss (5, 6) vor dem zweiten (7, 8) schließt.

2. Vorrichtung nach dem vorhergehenden Anspruch, **dadurch gekennzeichnet, dass** der erste und der zweite Verschluss jeder mit einem mobilen Verschlusselement (5, 7) ausgerüstet sind, das mit ihren jeweiligen Sitzen (6, 8) am Körper (1) der Vorrichtung zusammenwirkt.

3. Vorrichtung nach dem vorhergehenden Anspruch, **dadurch gekennzeichnet, dass** der erste Verschluss (5, 6) so gestaltet ist, dass eine Feder (4) ihn in der normalen Richtung des Gasstroms zu seinem Sitz (6) drückt, um den Durchgang zu schließen, und durch einen einfachen mechanischen Anschlag mit dem zweiten Verschluss (7, 8) mechanisch verbunden ist, sodass der zweite Verschluss (7, 8) den ersten drückt, wenn das Öffnen stattfindet, und ein geringes Nachgeben in der mechanischen Verbindung zwischen den zwei Verschlüssen vorliegt, wenn beide Verschlüsse geschlossen sind.

4. Vorrichtung nach dem vorhergehenden Anspruch, **dadurch gekennzeichnet, dass** der zweite Verschluss (7, 8) den Durchfluss von Gas abschließt, wenn sein mobiles Verschlusselement (7) in der normalen Richtung des Gasstroms in seinem Sitz (8) anliegt.

5. Vorrichtung nach dem vorhergehenden Anspruch, **dadurch gekennzeichnet, dass** der zweite Verschluss (7, 8) mit den mobilen Mitteln (9) verbunden ist.

6. Vorrichtung nach Anspruch 4, **dadurch gekennzeichnet, dass** das mobile Element (7) des zweiten Verschlusses (7, 8) durch eine Feder zu seinem Sitz (8) gedrückt wird, die auf dem Körper (1) der Vorrichtung aufliegt und die bevorzugt durch einen mechanischen Anschlag mit den mobilen Mitteln (9, 11) verbunden ist.

7. Vorrichtung nach einem der Ansprüche 2-6, **dadurch gekennzeichnet, dass** das mobile Element (5) des ersten Verschlusses (5, 6) mit einem konischen Teil, der mit dem Sitz (6) des ersten Verschlusses zusammenwirkt, und einem langgestreckten Teil, der sich durch den Sitz (6) unterhalb des konischen Teils erstreckt, ausgerüstet ist.

8. Vorrichtung nach dem vorhergehenden Anspruch, **dadurch gekennzeichnet, dass** das mobile Element (7) des zweiten Verschlusses (7, 8) mit einem konischen Teil, der mit dem Sitz (8) des zweiten Verschlusses zusammenwirkt, und einem langgestreckten Teil, der sich durch den Sitz (8) stromabwärts von dem konischen Teil erstreckt, ausgerüstet ist.

9. Vorrichtung nach dem vorhergehenden Anspruch, **dadurch gekennzeichnet, dass** der langgestreckte Teil des mobilen Elements (5) des ersten Verschlusses (5, 6) mit dem konischen Teil des mobilen Elements (7) des zweiten Verschlusses (7, 8) zusammenwirkt.

10. Vorrichtung nach dem vorhergehenden Anspruch, **dadurch gekennzeichnet, dass** der konische Teil des mobilen Elements (7) des zweiten Verschlusses (7, 8) mit einem Hohlraum versehen ist, der den Anschlag des langgestreckten Teils des mobilen Elements (5) des ersten Verschlusses (5, 6) aufnimmt, um die Öffnungsbewegung des zweiten Verschlusses von den mobilen Elementen (9, 11) auf das mobile Element (5) des ersten Verschlusses (5, 6) zu übertragen.

11. Vorrichtung nach dem vorhergehenden Anspruch, **dadurch gekennzeichnet, dass** der langgestreckte Teil des mobilen Elements (5) des ersten Verschlusses (5, 6) weg von dem ihn aufnehmenden Hohlraumanschlag des zweiten Verschlusses platziert ist, wenn beide Verschlüsse geschlossen sind.

## Claims

1. Gas releasing and/or regulating device comprising:
a body (1) with a passage, a gas inlet (2) and a gas outlet (3), the inlet and outlet being connected to the passage;
shut-off means (5, 6, 7, 8) for shutting-off the passage;
mobile means (9, 12) defining with the device body (1) a low pressure chamber (11) downstream of the shut-off means (5, 6, 7, 8);
the shut-off means (5, 6, 7, 8) comprising a first shutter (5, 6) and a second shutter (7, 8) placed downstream of the first one in the passage;
**characterized in that**
the mobile means (9, 11) operate the shut-off means (5, 6, 7, 8) dependent on the pressure within the low pressure chamber (11), and the first and second shutters (5, 6, 7, 8) are mechanically linked so that the first shutter (5, 6) closes before the second one (7, 8).

2. The device according to the previous claim, **characterized in that** the first and second shutters are each equipped with a shutter mobile element (5, 7) cooperating with their respective seats (6, 8) on the device's body (1).

3. The device according to the previous claim, **characterized in that** the first shutter (5, 6) is designed so that a spring (4) pushes it towards its seat (6) in the normal direction of gas flow in order to close the passage, and is mechanically linked to the second shutter (7, 8) by a simple mechanical end stop so that the second shutter (7, 8) pushes the first one when opening occurs and there is a little give in the mechanical link between the two shutters when both shutters are closed.

4. The device according to the previous claim, **characterized in that** the second shutter (7, 8) closes the passage of gas when its shutter mobile element (7) is resting in its seat (8) in the normal direction of gas flow.

5. The device according to the previous claim, **characterized in that** the second shutter (7, 8) is linked to the mobile means (9).

6. The device according to the claim 4, **characterized in that** the mobile element (7) of the second shutter (7, 8) is pushed towards its seat (8) by a spring resting on the device's body (1) and, preferably, is connected to the mobile means (9, 11) by a mechanical end stop.

7. The device according to one of claims 2-6, **characterized in that** the mobile element (5) of the first shutter (5, 6) is equipped with a conical part cooperating with the seat (6) of the first shutter, and an elongated part stretching across the seat (6) below the conical part.

8. The device according to the previous claim, **characterized in that** the mobile element (7) of the second shutter (7, 8) is equipped with a conical part cooperating with the seat (8) of the second shutter, and an elongated part stretching across the seat (8) downstream of the conical part.

9. The device according to the previous claim, **characterized in that** the mobile element (5)'s elongated part of the first shutter (5, 6) cooperates with the mobile element (7)'s conical part of the second shutter (7, 8).

10. The device according to the previous claim, **characterized in that** the mobile element (7)'s conical part of the second shutter (7, 8) is equipped with a cavity receiving the end stop of the mobile element (5)'s elongated part of the first shutter (5, 6) in order to transmit the opening movement of the second shutter from the mobile elements (9, 11) to the mobile element (5) of the first shutter (5,6).

11. The device according to the previous claim, **characterized in that** the mobile element (5)'s elongated part of the first shutter (5, 6) is placed away from the cavity end stop of the second shutter receiving it when both shutters are closed.
